# EUROPEAN PATENT APPLICATION

(11) **EP 4 826 287 A1**
(43) Date of publication of application: **21.10.2026**
(21) Application number: 24903650.0
(22) Date of filing: 09.12.2024
(51) Int. Cl.: F17C 9/02

(54) **CARBON DIOXIDE LIQUEFACTION DEVICE**

(30) Priority: 13.12.2023 JP 2023210363
(71) Applicant: Mitsui O.S.K. Lines, Ltd., Tokyo 105-8688 (JP)
(72) Inventor: UMEMURA, Hitomi, Tokyo 105-8688 (JP); NAKAMURA, Masaki, Tokyo 105-8688 (JP)
(74) Representative: Meissner Bolte Partnerschaft mbB
(86) International application number: PCT/JP2024/043383
(87) International publication number: WO 2025/126996

(57) **Abstract**

A carbon dioxide liquefaction device (20) comprises a liquefaction heat exchanger (5) that exchanges heat so that carbon dioxide contained in a mixed gas discharged from a fuel cell (2) is cooled and liquefied by the cold energy of a liquefied gas, a pressure sensor (13) that detects an internal pressure of the liquefaction heat exchanger (5), a liquid level sensor (14) for detecting a liquid amount that is the amount of liquefied carbon dioxide liquefied by the liquefaction heat exchanger (5), and a control device (1) that controls the amount of the liquefied gas fed into the liquefaction heat exchanger (5), on the basis of the internal pressure detected by the pressure sensor (13) and the liquid amount detected by the liquid level sensor (14).

## Description

### Technical Field

The present invention relates generally to a carbon dioxide liquefaction device.

### Background Art

In general, use of liquefied natural gas (LNG) as fuel for fuel cells is known. When the LNG is used as fuel, the fuel cells emit carbon dioxide. Carbon dioxide discharged from the fuel cells is often released into the atmosphere.

However, there are concerns about the environmental impact of releasing carbon dioxide into the atmosphere. To prevent carbon dioxide from being released into the atmosphere, there is a demand for liquefying and storing carbon dioxide.

### Summary of Invention

An object of embodiments of the present invention is to provide a carbon dioxide liquefaction device which efficiently liquefies carbon dioxide discharged from a fuel cell.

A carbon dioxide liquefaction device according to an aspect of the present invention includes a liquefaction heat exchanger performing heat exchange to cool and liquefy carbon dioxide contained in mixed gas discharged from a fuel cell with cold energy of liquefied gas, a pressure sensor detecting an internal pressure of the liquefaction heat exchanger, a liquid amount sensor for detecting an amount of liquid which is an amount of liquefied carbon dioxide liquefied by the liquefaction heat exchanger, and a controller controlling the amount of the liquefied gas to be fed into the liquefaction heat exchanger based on the internal pressure detected by the pressure sensor and the amount of liquid detected by the liquid amount sensor.

### Brief Description of Drawings

FIG. 1 is a configuration diagram showing a configuration of a carbon dioxide liquefaction device according to a first embodiment of the present invention.
FIG. 2 is a configuration diagram showing a configuration of a ship according to a second embodiment of the present invention.
FIG. 3 is a configuration diagram showing a configuration of a ship according to a third embodiment of the present invention.
FIG. 4 is a configuration diagram showing a configuration of a ship according to a fourth embodiment of the present invention.
FIG. 5 is a configuration diagram showing a configuration of a ship according to a fifth embodiment of the present invention.

### Mode for Carrying Out the Invention

### (First Embodiment)

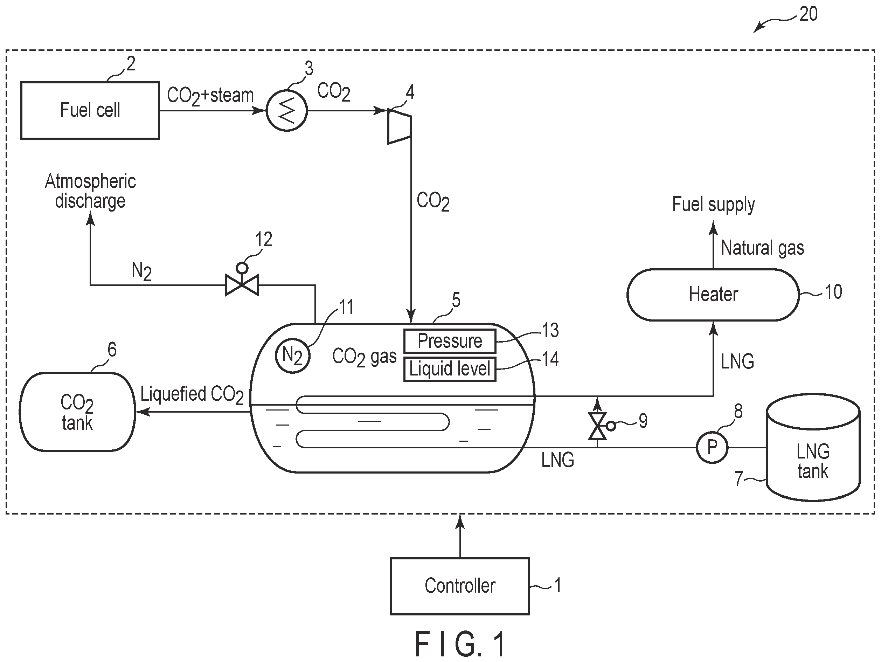

FIG. 1 is a configuration diagram showing a configuration of a carbon dioxide liquefaction device 20 according to a first embodiment of the present invention. The same portions in the drawings are denoted by the same reference numerals and redundant descriptions are omitted as appropriate.

The carbon dioxide liquefaction device 20 is not limited to being fixed and installed on land or sea, but may be installed in a mobile body such as a ship, a vehicle, or an aircraft.

The carbon dioxide liquefaction device 20 comprises a controller 1, a fuel cell 2, a condenser 3, a compressor 4, a liquefaction heat exchanger 5, a liquefied carbon dioxide tank 6, an LNG tank 7, a pump 8, a bypass valve 9, a heater 10, a gas sensor 11, an exhaust valve 12, a pressure sensor 13, and a liquid level sensor 14. Incidentally, as long as the carbon dioxide liquefaction device 20 includes at least the controller 1 and the liquefaction heat exchanger 5 as its constituent devices, the other devices may be provided as external devices of the carbon dioxide liquefaction device 20.

The mixed gas containing carbon dioxide discharged from the fuel cell 2 passes through the condenser 3, the compressor 4, and the liquefaction heat exchanger 5 in sequence, where the carbon dioxide is extracted and liquefied. The liquefied carbon dioxide is fed into the liquefied carbon dioxide tank 6. A path (pipe) is provided to sequentially connect the fuel cell 2, the condenser 3, the compressor 4, the liquefaction heat exchanger 5, and the liquefied carbon dioxide tank 6.

The LNG taken out from the LNG tank 7 is fed as fuel to the LNG supply destination via the pump 8, the liquefaction heat exchanger 5, and the heater 10 in order. A path (pipe) is provided to sequentially connect the LNG tank 7, the pump 8, the liquefaction heat exchanger 5, the heater 10, and the supply destination.

The controller 1 performs main control for liquefying carbon dioxide in the carbon dioxide liquefaction device 20. The controller 1 may control or monitor any components that constitute the carbon dioxide liquefaction device 20. The controller 1 may also be used as a controller which controls the power generation of the fuel cell 2. The controller 1 may include a computer for performing various calculation processes, and may be composed of a plurality of computers.

The fuel cell 2 generates electric power by using oxygen in the air and hydrogen contained in natural gas vaporized from the LNG supplied as fuel. For example, the fuel cell 2 is a solid oxide fuel cell (SOFC), but other types of fuel cells may be used. In addition, the LNG will be described as the fuel for the fuel cell 2, but liquefied petroleum gas (LPG) may be used. The mixed gas discharged from the fuel cell 2 mainly contains water vapor and carbon dioxide and may further contain nitrogen.

Incidentally, the carbon dioxide liquefaction device 20 may also include a device for removing or separating any substances discharged from the fuel cell 2, and such processing may be performed at any location in the process of liquefying the carbon dioxide.

The condenser 3 converts the water vapor contained in the mixed gas discharged from the fuel cell 2 back into water. Thus, the condenser 3 removes the water vapor from the mixed gas and extracts carbon dioxide. The condenser 3 feeds the extracted carbon dioxide into the compressor 4. By thus completely removing the moisture from the mixed gas, ice is prevented from being formed when cooling to liquefy the carbon dioxide.

Incidentally, the condenser may be configured in any manner as long as the condenser is configured to remove moisture from the mixed gas. For example, in order to completely remove moisture which cannot be removed by the condenser 3, a device for removing moisture such as a dryer or a dehumidifier may be added or these devices may be provided instead of the condenser 3. In addition, the configuration for removing moisture may be provided at any location on the path where the gas discharged from the fuel cell 2 is fed into the liquefaction heat exchanger 5.

The compressor 4 compresses the carbon dioxide fed from the condenser 3. The compressor 4 feeds the compressed carbon dioxide into the liquefaction heat exchanger 5.

The liquefaction heat exchanger 5 cools and liquefies the carbon dioxide fed from the compressor 4 by using the LNG to be supplied from the LNG tank 7 to the supply destination as the fuel. As a result, heat exchange between the LNG and carbon dioxide is performed. The liquefaction heat exchanger 5 is provided with a pipe through which the LNG for cooling the carbon dioxide passes. The liquefaction heat exchanger 5 feeds the liquefied carbon dioxide to the liquefied carbon dioxide tank 6. The LNG used for cooling in the liquefaction heat exchanger 5 is supplied to the supply destination as the fuel. The supply destination may be the fuel cell 2 or any other device. Incidentally, the LNG to be liquefied may be cooled in advance by a cooler or the like before being fed into the liquefaction heat exchanger 5.

The liquefied carbon dioxide tank 6 stores the carbon dioxide liquefied by the liquefaction heat exchanger 5. The liquefied carbon dioxide tank 6 may be installed so as to be removable. As a result, the liquefied carbon dioxide tank 6 in which the liquefied carbon dioxide is stored can be transported, making it easier to process the liquefied carbon dioxide.

The LNG tank 7 is a tank which stores the LNG and is a supply source which supplies the LNG. The LNG stored in the LNG tank 7 is used as the fuel at the supply destination such as the fuel cell 2, and is also used as a refrigerant to cool carbon dioxide in the liquefaction heat exchanger 5. The number of LNG tanks is not limited to one, but any number of such tanks may be provided.

The pump 8 is a device for feeding the LNG from the LNG tank 7 to the supply destination. Any number of pumps 8 may be provided and may be provided at any location in the path for supplying the LNG from the LNG tank 7 to the supply destination.

The bypass valve 9 is a device provided in a path for supplying the LNG from the LNG tank 7 to the supply destination to form a path which serves as a bypass avoiding the liquefaction heat exchanger 5 and supplying the LNG to the supply destination. By closing the bypass valve 9, the LNG supplied from the LNG tank 7 is supplied to the supply destination via the liquefaction heat exchanger 5. By opening the bypass valve 9, a part or all of the LNG supplied from the LNG tank 7 is supplied to the supply destination without passing through the liquefaction heat exchanger 5. The bypass valve 9 may comprise a function for adjusting the opening degree. The amount of LNG supplied from the LNG tank 7 to the liquefaction heat exchanger 5 can be thereby adjusted. For example, the opening/closing or the opening degree operation of the bypass valve 9 is controlled by the controller 1. Incidentally, a valve for adjusting the amount of LNG supplied to the liquefaction heat exchanger 5 may be provided in addition to the bypass valve 9.

The heater 10 is a device for heating the LNG to natural gas at a temperature suitable for the supply destination. When the LNG is fed to the heater 10 via the liquefaction heat exchanger 5, the heater 10 further heats the LNG heated by the liquefaction heat exchanger 5. When the LNG is fed to the heater 10 without passing through the liquefaction heat exchanger 5, the heater 10 heats the LNG supplied directly from the LNG tank 7. Therefore, when the LNG is supplied to the heater 10 via the liquefaction heat exchanger 5, the heater 10 can reduce the amount of heating of the LNG by the amount of heating in the liquefaction heat exchanger 5.

The gas sensor 11 is a sensor for recognizing the amount of nitrogen inside the liquefaction heat exchanger 5. The gas sensor 11 is not limited to a sensor capable of detecting nitrogen as long as the sensor can recognize the amount of nitrogen inside the liquefaction heat exchanger 5. For example, the gas sensor 11 may be a sensor for detecting the concentration of carbon dioxide. In this case, the amount of nitrogen inside the liquefaction heat exchanger 5 is determined based on the concentration of the remainder obtained by subtracting the amount of carbon dioxide (concentration detected by the gas sensor 11) from the total amount of gas inside the liquefaction heat exchanger 5 (concentration at 100%). The detection value detected by the gas sensor 11 is transmitted to the controller 1.

The exhaust valve 12 is a valve for exhausting nitrogen accumulated inside the liquefaction heat exchanger 5. Since nitrogen is not liquefied by cooling with the liquefaction heat exchanger 5, nitrogen is stored inside the liquefaction heat exchanger 5. For example, when the amount of nitrogen determined based on the detection value by the gas sensor 11 exceeds a preset threshold value, the exhaust valve 12 is opened. The exhaust valve 12 may comprise a function of adjusting the opening degree. For example, the opening/closing or the opening degree operation of the exhaust valve 12 is controlled by the controller 1. As a result, the nitrogen accumulated inside the liquefaction heat exchanger 5 is released into the atmosphere. Carbon dioxide may be contained in the gas released from the exhaust valve 12. In addition, a device (filter or the like) for suppressing the release of carbon dioxide may be provided.

The pressure sensor 13 is a sensor for detecting the internal pressure of the liquefaction heat exchanger 5. The pressure sensor 13 transmits the detected pressure value to the controller 1. The pressure value detected by the pressure sensor 13 is used to control the carbon dioxide liquefaction process.

The liquid level sensor 14 is a sensor for detecting a liquid level (height of the liquid surface) of the liquefied carbon dioxide accumulated in the liquefaction heat exchanger 5. The liquid level of the liquefied carbon dioxide indicates the amount of liquefied carbon dioxide. The liquid level sensor 14 transmits the detected liquid level to the controller 1. The liquid level detected by the liquid level sensor 14 is used to control the carbon dioxide liquefaction process. Incidentally, the sensor is not limited to the liquid level sensor 14, but any sensor may be used as long as the sensor detects a physical quantity which indicates the amount of liquefied carbon dioxide.

Next, the control of the carbon dioxide liquefaction process using the controller 1 will be described.

The controller 1 controls the carbon dioxide liquefaction process so as to balance the cold energy of LNG (LNG cold energy) and the energy for liquefying carbon dioxide (liquefaction energy). When the LNG cold energy and the liquefaction energy for liquefying the fed carbon dioxide are balanced, the pressure value inside the liquefaction heat exchanger 5 and the amount (liquid level) of liquefied carbon dioxide are always within a certain range. The controller 1 controls the carbon dioxide liquefaction device 20 so as to maintain this state. More specifically, the controller 1 adjusts the inflow amount of LNG such that the pressure value detected by the pressure sensor 13 falls within a predetermined range and that the liquid level detected by the liquid level sensor 14 falls within a predetermined range.

The controller 1 determines the status of the carbon dioxide liquefaction process, based on the internal pressure of the liquefaction heat exchanger 5 detected by the pressure sensor 13 and the liquid level of the liquefied carbon dioxide detected by the liquid level sensor 14.

If the LNG cold energy is greater than the liquefaction energy expected from the amount of fed carbon dioxide, the carbon dioxide liquefaction process may proceed faster than expected and the carbon dioxide may turn into dry ice. In this case, the liquid level of the liquefied carbon dioxide may rise and the internal pressure of the liquefaction heat exchanger 5 may decrease.

If the LNG cold energy is less than the liquefaction energy expected from the amount of fed carbon dioxide, the carbon dioxide liquefaction process may be slower than expected. In this case, the liquid level of the liquefied carbon dioxide may drop and the internal pressure of the liquefaction heat exchanger 5 may rise.

When determining that the LNG cold energy is greater than the expected liquefaction energy based on the pressure value detected by the pressure sensor 13 and the liquid level detected by the liquid level sensor 14, the controller 1 controls to reduce the inflow amount of LNG. More specifically, the controller 1 controls to open the bypass valve 9 or to increase the opening degree of the bypass valve 9. Incidentally, the controller 1 may control the pump 8 to reduce the amount of LNG taken out from the LNG tank 7 or may control the operation of the fuel cell 2 to increase the amount of carbon dioxide output from the fuel cell 2.

When determining that the LNG cold energy is less than the expected liquefaction energy based on the pressure value detected by the pressure sensor 13 and the liquid level detected by the liquid level sensor 14, the controller 1 controls to increase the inflow amount of LNG. More specifically, the controller 1 controls to close the bypass valve 9 or to reduce the opening degree of the bypass valve 9. Incidentally, the controller 1 may control the pump 8 to increase the amount of LNG taken out from the LNG tank 7 or may control the operation of the fuel cell 2 to reduce the amount of carbon dioxide output from the fuel cell 2.

In addition to the control performed to balance the LNG cold energy and liquefaction energy described above, the controller 1 constantly controls the discharge of nitrogen such that nitrogen is not accumulated inside the liquefaction heat exchanger 5. Nitrogen tends to be accumulated in the upper part of the liquefaction heat exchanger 5. When determining that nitrogen is accumulated inside the liquefaction heat exchanger 5 based on the detection value from the gas sensor 11, the controller 1 opens the exhaust valve 12.

When nitrogen is accumulated inside the liquefaction heat exchanger 5, the internal pressure of the liquefaction heat exchanger 5 rises regardless of the liquid level of the liquefied carbon dioxide. Therefore, the controller 1 may to determine whether or not nitrogen is accumulated, by using the detection value from the pressure sensor 13 or the liquid level sensor 14 in addition to the detection value from the gas sensor 11.

If the gas sensor 11 is a sensor which detects nitrogen, the controller 1 outputs an open command to the exhaust valve 12 when the value detected by the gas sensor 11 exceeds a predetermined reference value. If the gas sensor 11 is a sensor which detects carbon dioxide, the controller 1 outputs an open command to the exhaust valve 12 when the value detected by the gas sensor 11 falls below a predetermined reference value.

Incidentally, an optional cooler for cooling the carbon dioxide to liquefy may be provided at least in one of a front stage or a back stage of the liquefaction heat exchanger 5. The cooling method of the cooler provided in this manner is not limited to using the LNG cold energy, but any cooling method may be adopted. For example, such a cooler is used when the carbon dioxide cannot be sufficiently cooled by the liquefaction heat exchanger 5 alone.

According to this embodiment, carbon dioxide can be liquefied by cooling and liquefying carbon dioxide discharged from the fuel cell 2 using as the cold energy the liquefied gas (LNG, LPG, or the like) that is the fuel for the fuel cell 2. In addition, carbon dioxide can be efficiently liquefied by adjusting the amount of LNG used as the cold energy in accordance with the amount of carbon dioxide discharged from the fuel cell 2.

### (Second Embodiment)

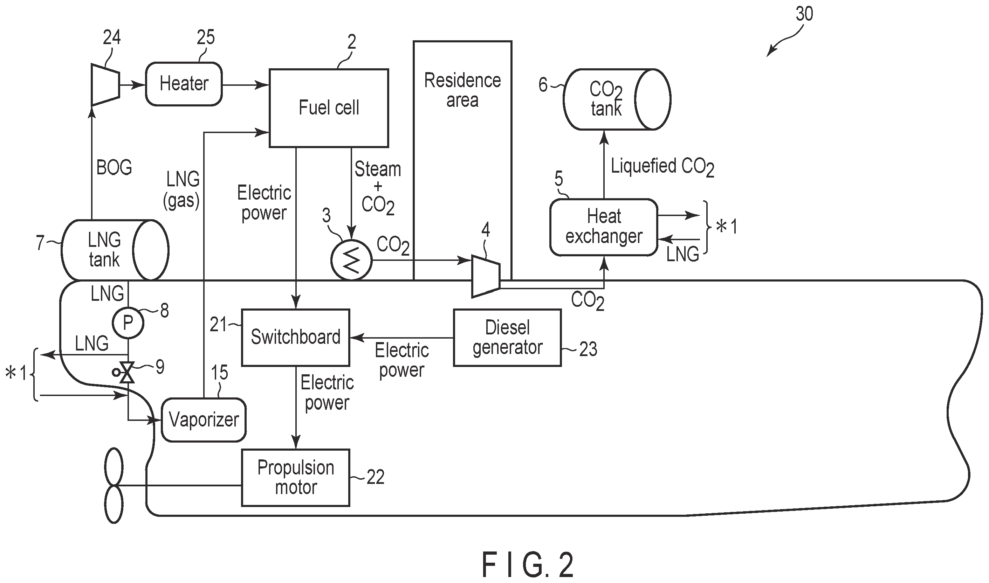

FIG. 2 is a configuration diagram showing a configuration of a ship 30 according to a second embodiment of the present invention. The carbon dioxide liquefaction device 20 according to the first embodiment is mounted on the ship 30.

In this embodiment, some of the components of the carbon dioxide liquefaction device 20 are omitted, but the ship 30 may include all of the components of the carbon dioxide liquefaction device 20 or some of the components that are not necessarily required for liquefying carbon dioxide may be removed. In addition, duplicate descriptions of the components described in the first embodiment will be omitted as appropriate. Furthermore, the arrangement of the components in the ship 30 shown in FIG. 2 is an image showing one example, and the components may be arranged in any manner and the ship 30 may have any configuration or shape.

The ship 30 is a ship which obtains propulsive power by electric power generated by the fuel cell 2. The ship 30 may be any ship as long as the ship is provided with facilities for storing the LNG. For example, the ship 30 may be an LNG ship intended for transporting the LNG or a ship using the LNG as the fuel. Furthermore, the LNG may be used as the fuel in applications other than the fuel cell 2.

The ship 30 comprises a controller 1, a fuel cell 2, a condenser 3, a compressor 4, a liquefaction heat exchanger 5, a liquefied carbon dioxide tank 6, an LNG tank 7, a pump 8, a bypass valve 9, a vaporizer 15, a switchboard 21, a propulsion motor 22, a diesel generator 23, a compressor 24, and a heater 25.

The controller 1 is not shown in FIG. 2, but is provided in, for example, a control room inside a residence area including a bridge and the like. The controller 1 may be mounted as a part of the function of any device or system in the ship 30.

The fuel cell 2 generates power using the LNG supplied from the LNG tank 7 and boil off gas (BOG) generated in the LNG tank 7 as the fuel. BOG is gaseous natural gas that is generated by vaporizing part of the LNG stored in the LNG tanks 7 by external heat. The fuel cell 2 supplies the generated electric power to the propulsion motor 22 via the switchboard 21.

The LNG tank 7 is a tank for storing the LNG on board the ship. The LNG tank 7 may be a fuel tank for storing LNG as fuel or a tank for transporting the LNG.

The pump 8 supplies the LNG stored in the LNG tank 7 to the fuel cell 2 via the liquefaction heat exchanger 5 and the vaporizer 15 in order. The bypass valve 9 is provided in the path between the pump 8 and the vaporizer 15. The LNG passing through the bypass valve 9 bypasses the liquefaction heat exchanger 5 and is fed into the vaporizer 15.

The vaporizer 15 is a device which forcibly vaporizes the LNG to generate natural gas. The natural gas generated by the vaporizer 15 is supplied to the fuel cell 2. The vaporizer 15 may be a device corresponding to the heater 10 according to the first embodiment.

The switchboard 21 supplies the electric power generated by the fuel cell 2 and the diesel generator 23 to the propulsion motor 22. The switchboard 21 comprises a plurality of switches for selecting the supply sources and supply destinations of the electric power, respectively. As a result, the switchboard 21 can form a path (line) for selecting any combination of the supply source and the supply destination.

The propulsion motor 22 is an electric motor serving as a power source which supplies power to drive a propeller using electric power supplied from the fuel cell 2 and the diesel generator 23. The propeller is a device for obtaining the propulsive force of the ship 30. The propeller may be any device as long as the device can obtain the propulsive force of the ship 30. For example, the propulsion motor 22 rotates a rotating shaft of the propeller.

The diesel generator 23 is a generator which generates electric power by burning the fuel. The diesel generator 23 may be either oil-fired or gas-fired. Furthermore, the diesel generator 23 may be supplied with the LNG as the fuel from the LNG tank 7 or may be supplied with the fuel from a fuel tank provided separately from the LNG tank 7. Incidentally, the generator 23 is not limited to a diesel type, but may be any type of combustion type generator. The electric power generated by the diesel generator 23 is supplied to the propulsion motor 22 via the switchboard 21. For example, the diesel generator 23 is used to supply the electric power to the propulsion motor 22 when the ship 30 is sailing within the harbor or during standby.

The compressor 24 compresses the BOG generated in the LNG tank 7. The compressor 24 feeds the compressed BOG to the heater 25.

The heater 25 supplies the compressed BOG fed from the compressor 24 to the fuel cell 2 as the fuel.

According to this embodiment, the ship 30 can be constructed to which the carbon dioxide liquefaction device 20 according to the first embodiment is applied, and the same functions and effects as those of the first embodiment can be obtained.

### (Third Embodiment)

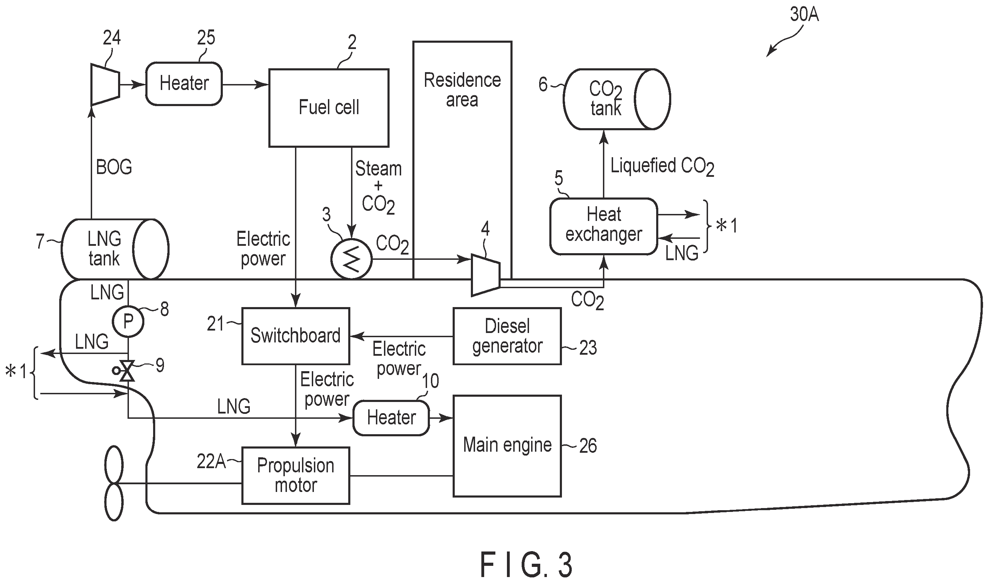

FIG. 3 is a configuration diagram showing a configuration of a ship 30A according to a third embodiment of the present invention.

The ship 30A is configured such that, in the ship 30 according to the second embodiment, the propulsion motor 22 is replaced with a propulsion motor 22A, a main engine 26 and the heater 10 according to the first embodiment are added, and the vaporizer 15 is removed. The ship is the same as the ship 30 according to the second embodiment in the other points.

The main engine 26 is an engine serving as a power source which burns the LNG supplied from the LNG tank 7 to supply power to drive the propeller. For example, the main engine 26 rotates a rotating shaft of the propeller. The main engine 26 is, for example, a diesel engine, but is not limited to diesel type and may be any type of combustion engine.

The heater 10 heats the LNG fed to the main engine 26. The heater 10 heats the LNG to a temperature appropriate for use as the fuel for the main engine 26.

The propulsion motor 22A is an electric motor (power source) for assisting the power supplied from the main engine 26 to the propeller. The propulsion motor 22A supplies power to drive the propeller using the electric power supplied from the switchboard 21. For example, the propulsion motor 22A supplies power to assist the rotation of the rotating shaft of the propeller, which rotates using the power supplied from the main engine 26.

Incidentally, the ship 30A may be configured to supply power from the switchboard 21 to any device on board without providing the propulsion motor 22A.

According to this embodiment, the same functions and effects as those of the second embodiment can be obtained in the ship 30A which uses the diesel engine as the main engine 26.

### (Fourth Embodiment)

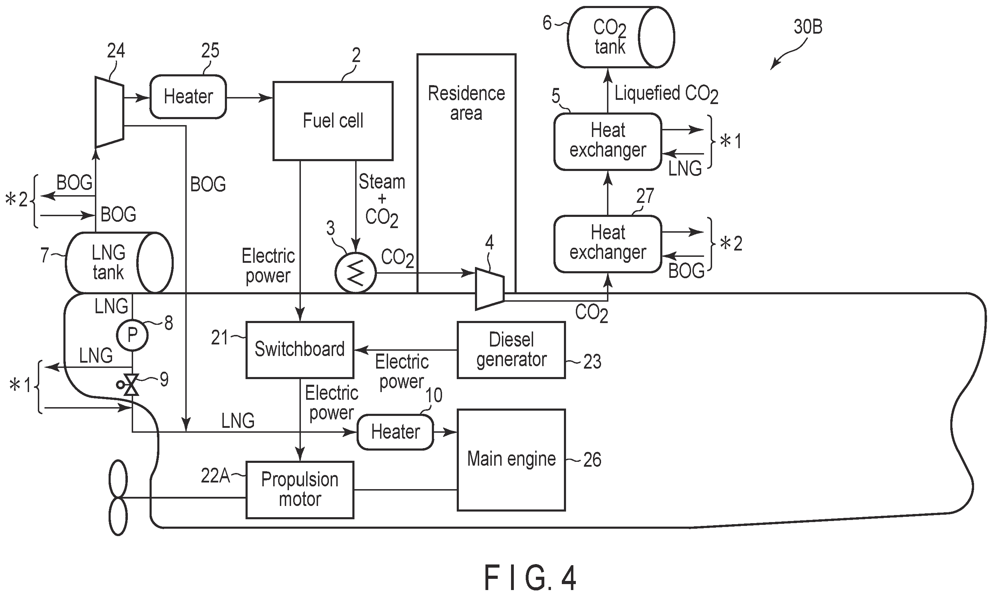

FIG. 4 is a configuration diagram showing a configuration of a ship 30B according to a fourth embodiment of the present invention.

The ship 30B is configured such that a heat exchanger 27 is added to the ship 30A according to the third embodiment. In addition, an additional path is formed such that the BOG compressed by the compressor 24 is supplied as the fuel to the main engine 26 via the heater 10. The ship is the same as the ship 30A according to the third embodiment in the other points. In addition, the ship 30B may be configured to supply power from the switchboard 21 to any device on board without providing the propulsion motor 22A, similarly to the ship 30A according to the third embodiment.

The BOG compressed by the compressor 24 is heated by the heater 10 and supplied to the main engine 26. The main engine 26 drives using the BOG as the fuel in addition to the LNG supplied from the LNG tank 7.

The heat exchanger 27 plays a role of a cooler which preliminarily cools the carbon dioxide before cooled (liquefied) by the liquefaction heat exchanger 5. The heat exchanger 27 is provided in the middle of the path in which the carbon dioxide is fed from the compressor 4 to the liquefaction heat exchanger 5. The heat exchanger 27 is provided with a pipe through which the BOG passes in order to cool the carbon dioxide. A pipe for feeding the BOG from the LNG tank 7 to the compressor 24 is formed to pass through the heat exchanger 27.

The heat exchanger 27 cools the carbon dioxide fed from the compressor 4 by using the cold energy of the BOG. As a result, heat exchange between the BOG and carbon dioxide is performed. The heat exchanger 27 feeds the cooled carbon dioxide to the liquefaction heat exchanger 5. The BOG used for cooling in the heat exchanger 27 is supplied as the fuel to the fuel cell 2 via the compressor 24 and the heater 25.

According to this embodiment, the efficiency of cooling carbon dioxide can be improved compared to the third embodiment by providing the heat exchanger 27 which uses the BOG to cool carbon dioxide.

In addition, the fuel costs of the main engine 26 can be reduced by using the BOG generated in the LNG tank 7 as the fuel for the main engine 26.

### (Fifth Embodiment)

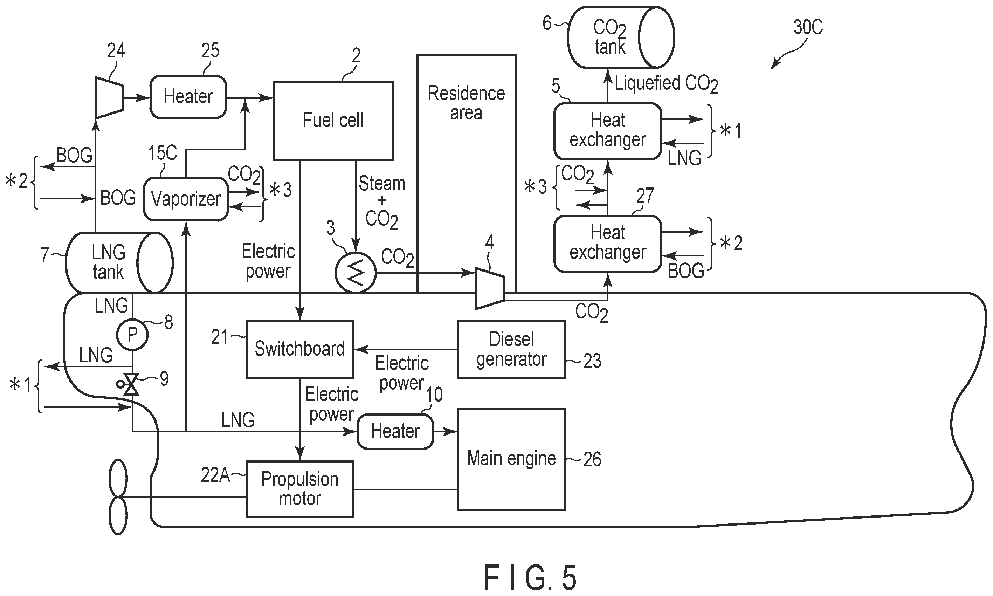

FIG. 5 is a configuration diagram showing a configuration of a ship 30C according to a fifth embodiment of the present invention.

The ship 30C is configured such that the path in which BOG is supplied from the compressor 24 to the main engine 26 is removed and a vaporizer 15C is added in the ship 30B according to the fourth embodiment. The ship is the same as the ship 30A according to the third embodiment in the other points. In addition, the ship 30C may be configured to supply power from the switchboard 21 to any device on board without providing the propulsion motor 22A, similarly to the ship 30A according to the third embodiment.

The vaporizer 15C has the same configuration as the vaporizer 15 according to the second embodiment, and their differences will mainly be described here. The vaporizer 15C is a heat exchanger which heats the LNG supplied to the fuel cell 2 by using liquefied carbon dioxide as a heat medium. As a result, heat exchange between carbon dioxide and the LNG is performed.

The vaporizer 15C is provided in the middle of the path where the LNG used as a refrigerant by the liquefaction heat exchanger 5 or the LNG bypassing the liquefaction heat exchanger 5 and passing through the bypass valve 9 is supplied to the fuel cell 2. The vaporizer 15C is provided with a pipe through which carbon dioxide passes to heat the LNG. A pipe for feeding the carbon dioxide cooled by the heat exchanger 27 to the liquefaction heat exchanger 5 is formed to pass through the vaporizer 15C.

The vaporizer 15C vaporizes the LNG by heating the LNG using carbon dioxide as a heat medium. The vaporizer 15C supplies the natural gas produced by vaporizing the LNG to the fuel cell 2. The carbon dioxide used as a heat medium in the vaporizer 15C is fed to the liquefaction heat exchanger 5.

According to this embodiment, the same functions and effects as those of the fourth embodiment can be obtained. Furthermore, by vaporizing the LNG which serves as the fuel for the fuel cell 2 using carbon dioxide to be liquefied, the energy efficiency of liquefying carbon dioxide and vaporizing the LNG can be improved.

Incidentally, additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A carbon dioxide liquefaction device **characterized by** comprising:
a liquefaction heat exchanger performing heat exchange to cool and liquefy carbon dioxide contained in mixed gas discharged from a fuel cell with cold energy of liquefied gas;
a pressure sensor detecting an internal pressure of the liquefaction heat exchanger;
a liquid amount sensor for detecting an amount of liquid which is an amount of liquefied carbon dioxide liquefied by the liquefaction heat exchanger; and
a controller controlling the amount of the liquefied gas to be fed into the liquefaction heat exchanger, based on the internal pressure detected by the pressure sensor and the amount of liquid detected by the liquid amount sensor.

2. The carbon dioxide liquefaction device of claim 1, **characterized by** further comprising:
a valve for supplying the liquefied gas to a supply destination without passing through the liquefaction heat exchanger from a supply source of the liquefied gas, wherein
the controller controls the amount of the liquefied gas to be fed into the liquefaction heat exchanger by operating the valve.

3. The carbon dioxide liquefaction device of claim 1, **characterized by** further comprising:
a gas sensor for recognizing an amount of nitrogen inside the liquefaction heat exchanger; and
a discharge valve for discharging nitrogen inside the liquefaction heat exchanger, wherein
the controller controls operating the discharge valve so as to discharge nitrogen inside the liquefaction heat exchanger, based on a detection value of the gas sensor.

4. The carbon dioxide liquefaction device of claim 1, **characterized in that**
the liquefied gas which is subjected to the head exchange by the liquefaction heat exchanger is supplied to a supply destination as fuel.

5. The carbon dioxide liquefaction device of claim 4, **characterized in that**
the supply destination includes the fuel cell.

6. The carbon dioxide liquefaction device of claim 1, **characterized by** further comprising:
a moisture removing device removing moisture contained in the mixed gas discharged from the fuel cell to extract carbon dioxide.

7. The carbon dioxide liquefaction device of claim 6, **characterized in that**
the moisture removing device includes a condenser removing water vapor.

8. A ship including the carbon dioxide liquefaction device of claim 1 mounted thereon, the ship **characterized by** comprising:
a liquefied gas tank storing the liquefied gas;
the fuel cell generating electric power using the liquefied gas supplied from the liquefied gas tank as fuel; and
a propeller for obtaining a propulsive force using the liquefied gas supplied from the liquefied gas tank as fuel.

9. The ship of claim 8, **characterized in that** the propeller obtains the propulsive force with the electric power generated by the fuel cell.

10. The ship of claim 8, **characterized by** further comprising:
a main engine driving the propeller using the liquefied gas supplied from the liquefied gas tank as fuel.

11. The ship of claim 8, **characterized by** further comprising:
a generator supplying electric power for the propeller to obtain a propulsive force.

12. The ship of claim 11, **characterized in that**
the propeller obtains the propulsive force with the electric power generated by the fuel cell and electric power generated by the generator.

13. A carbon dioxide liquefaction method **characterized by** comprising:
performing heat exchange in a liquefaction heat exchanger to cool and liquefy carbon dioxide contained in mixed gas discharged from a fuel cell with cold energy of liquefied gas;
detecting an internal pressure of the liquefaction heat exchanger;
detecting an amount of liquid which is an amount of liquefied carbon dioxide liquefied by the liquefaction heat exchanger; and
controlling the amount of the liquefied gas to be fed into the liquefaction heat exchanger, based on the detected internal pressure and the detected amount of liquid.
